# EUROPÄISCHE PATENTSCHRIFT

(11) **EP 3 546 327 B1**
(45) Veröffentlichungstag und Bekanntmachung des Hinweises auf die Patenterteilung: **08.06.2022**
(21) Anmeldenummer: 19159128.8
(22) Anmeldetag: 25.02.2019
(51) Int. Cl.: B62J 7/00, B62J 7/04

(54) **GEPÄCKTRÄGER FÜR EIN ZWEIRAD**
LUGGAGE RACK FOR A BICYCLE
PORTE-BAGAGES POUR DEUX-ROUES

(30) Priorität: 29.03.2018 DE 202018101779 U
(43) Veröffentlichungstag der Anmeldung: 02.10.2019
(60) Teilanmeldung: 22170048.7
(73) Patentinhaber: SKS metaplast Scheffer-Klute GmbH, 59846 Sundern (DE)
(72) Erfinder: NÖCKER, Alexander, 59846 Sundern (DE); KORDES, Sven, 59846 Sundern (DE); GRABSKI, Karsten, 59469 Ense (DE)
(74) Vertreter: Basfeld, Rainer

(56) Entgegenhaltungen:
- EP-A2- 2 609 000
- FR-A1- 2 516 468
- NZ-A- 579 236

## Beschreibung

Die vorliegende Erfindung betrifft einen Gepäckträger für das Hinterrad eines Zweirads, insbesondere für das Hinterrad eines Fahrrads, gemäß dem Oberbegriff des Anspruchs 1 sowie die Anordnung eines derartigen Gepäckträgers an einem Zweirad.

Gepäckträger für ein Zweirad sind bekannt. Sie umfassen beispielsweise ein langgestrecktes, mehrfach gebogenes Rohr, von dem sich im an dem Zweirad angebrachten Zustand des Gepäckträgers an jeder der beiden Seiten beispielsweise des Hinterrades des Fahrrads jeweils ein Abschnitt erstreckt. Die beiden Abschnitte sind dabei in der Regel durch einen sich in Fahrradquerrichtung erstreckenden Querabschnitt des Rohres miteinander verbunden. Die beiden an den Seiten des Rades angeordneten Abschnitte verlaufen von dem Querabschnitt ein Stück horizontal und anschließend nach unten, wo sie Öffnungen für die Verbindung mit den Ausfallenden des Rahmens des Fahrrads aufweisen. Es sind weiterhin stegförmige Verbindungsmittel vorgesehen, die die beiden horizontalen Abschnitte beabstandet zu dem Querabschnitt miteinander verbinden. Die stegförmigen Verbindungsmittel sind dabei an die horizontalen Abschnitte angeschweißt.

Die Verschweißung der Verbindungsmittel mit den horizontalen Abschnitten erweist sich als sehr aufwendig, insbesondere als sehr lohnkostenintensiv.

Ein Gepäckträger der eingangs genannten Art ist aus der FR 2 516 468 A1 bekannt. Der darin beschriebene Gepäckträger umfasst ein erstes langgestrecktes, mehrfach gebogenes Befestigungselement und ein zweites langgestrecktes, mehrfach gebogenes Befestigungselement. Sowohl von dem ersten Befestigungselement als auch von dem zweiten Befestigungselement erstreckt sich im an dem Zweirad angebrachten Zustand des Gepäckträgers an jeder der beiden Seiten des Hinterrades des Fahrrads jeweils ein Abschnitt. Jeweils an den unteren Enden der beiden Abschnitte des ersten Befestigungselements sind Bohrungen angeordnet, die zur Anbringung der unteren Enden an den Ausfallenden des Rahmens des Zweirads verwendet werden können. Die beiden Abschnitte des ersten Befestigungselements sind an ihren oberen, am hinteren Ende des Gepäckträgers angeordneten Enden durch einen sich in Fahrradquerrichtung erstreckenden Querabschnitt des ersten Befestigungselements miteinander verbunden. Gleichzeitig sind die beiden Abschnitte des ersten Befestigungselements unterhalb des Querabschnitts des ersten Befestigungselements mit den hinteren Enden der beiden Abschnitte des zweiten Befestigungselements über jeweils eine Schraubverbindung verbunden. Zusätzlich sind die beiden vorderen Enden der beiden Abschnitte des zweiten Befestigungselements über einen Querabschnitt des zweiten Befestigungselements miteinander verbunden.

Ein weiterer Gepäckträger für ein Zweirad ist aus der NZ 579 236 A bekannt. Der darin beschriebene Gepäckträger umfasst ein langgestrecktes, mehrfach gebogenes Rohr, von dem sich im an dem Zweirad angebrachten Zustand des Gepäckträgers an jeder der beiden Seiten des Hinterrades des Fahrrads jeweils ein Abschnitt erstreckt. Die beiden Abschnitte sind durch einen sich in Fahrradquerrichtung erstreckenden Querabschnitt des Rohres miteinander verbunden. An den beiden Abschnitten ist eine Abdeckung angebracht. An der Unterseite der Abdeckung sind zu diesem Zweck zwei schwenkbaren Halteklammern vorgesehen, die jeweils eine Ausnehmung aufweisen, in die einer der Abschnitte passend eingebracht werden kann. Durch das Eindrücken eines Auslösestifts können die Halteklammern aus der Eingriffsstellung herausgeschwenkt werden, so dass die Abdeckung abgenommen werden kann.

Aus der EP 2 609 000 A2 ist ein Gepäckträger bekannt, der zumindest teilweise die gleichen Merkmale wie der aus der NZ 579 236 A bekannte Gepäckträger aufweist.

Aus Dokument EP2609000A2 sind alle Merkmale der Präambel des Anspruchs 1 bekannt.

Das der vorliegenden Erfindung zugrundeliegende Problem ist die Schaffung eines Gepäckträgers der eingangs genannten Art, der einfacher, insbesondere kostengünstiger herstellbar ist.

Dies wird erfindungsgemäß durch einen Gepäckträger der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass der Querabschnitt im an dem Zweirad angebrachten Zustand des Gepäckträgers weiter vorne und höher an dem Zweirad als die Bohrungen angeordnet ist.

Durch eine mechanische Verbindung zwischen den beiden Abschnitten des Befestigungselements wird eine hohe Biegesteifigkeit der beiden Schenkel des Gepäckträgers erreicht, ohne dabei die aus dem Stand der Technik bekannten, aufwendigen stoffschlüssigen Verbindungen vorsehen zu müssen.

Es kann vorgesehen sein, dass die Verbindungsmittel derart gestaltet sind, dass durch die Verbindungsmittel die beiden Abschnitte des Befestigungselements über zwei Schraubverbindungen miteinander verbunden sind. Eine Schraubverbindung ist einfach zu realisieren.

Es besteht die Möglichkeit, dass die Verbindungsmittel zwei Aufnahmen aufweisen, in denen jeweils einer der beiden Abschnitte des Befestigungselements angeordnet und festgelegt ist oder angeordnet und festgelegt werden kann. Dabei kann mindestens eine der Aufnahmen oder jede der beiden Aufnahmen durch zwei Teile gebildet werden, die an den Querschnitt des Befestigungselements angepasste Aussparungen aufweisen, so dass die Teile zumindest abschnittsweise formschlüssig an dem Befestigungselement anliegen können. Vorzugsweise kann dabei die Festlegung einer der beiden Abschnitte des Befestigungselements in jeder der Aufnahmen durch eine Schraubverbindung erfolgen, wobei durch die Schraubverbindung insbesondere die beiden Teile an das Befestigungselement angedrückt werden. Die beiden Abschnitte des Befestigungselements werden also durch eine Klemmvorrichtung miteinander verbunden, wobei die Teile der Klemmvorrichtung durch eine einfache Schraubverbindung in einen klemmenden Zustand überführt werden.

Es kann vorgesehen sein, dass die Verbindungsmittel als eine Befestigungsbrücke, insbesondere als eine stegförmige Befestigungsbrücke, ausgebildet sind, die sich im an dem Zweirad angebrachten Zustand des Gepäckträgers von einer Seite des Rades zur anderen Seite des Rades erstreckt. Dabei können die Aufnahmen jeweils in einem endseitigen Bereich der Befestigungsbrücke angeordnet sein.

Es kann vorgesehen sein, dass die Verbindungsmittel eine Abdeckung umfassen, die im an dem Zweirad angebrachten Zustand des Gepäckträgers insbesondere die Oberseite der Verbindungsmittel abdecken kann. Dabei kann vorgesehen sein, dass die Abdeckung im an dem Zweirad angebrachten Zustand des Gepäckträgers auf ihrer Oberseite eine Kennzeichnung wie beispielsweise ein Logo aufweist oder aufweisen kann. Weiterhin kann vorgesehen sein, dass die Abdeckung im an dem Zweirad angebrachten Zustand des Gepäckträgers auf ihrer Rückseite einen Rückstrahler und/oder ein Rücklicht aufweist oder aufweisen kann. Zusätzlich besteht die Möglichkeit, dass die Abdeckung im an dem Zweirad angebrachten Zustand des Gepäckträgers auf ihrer Vorderseite eine Plakette, insbesondere eine Plakette mit Kennzeichnungen nach DIN EN ISO 11243, aufweist oder aufweisen kann. Durch die Abdeckung können somit die Verbindungsmittel dazu dienen, optionale Anbauteile an dem Gepäckträger anzubringen.

Alternativ kann vorgesehen sein, dass die Verbindungsmittel im an dem Zweirad angebrachten Zustand des Gepäckträgers auf ihrer Oberseite eine Kennzeichnung wie beispielsweise ein Logo aufweisen oder aufweisen können. Weiterhin kann vorgesehen sein, dass die Verbindungsmittel im an dem Zweirad angebrachten Zustand des Gepäckträgers auf ihrer Rückseite einen Rückstrahler und/oder ein Rücklicht aufweisen oder aufweisen können. Es besteht auch die Möglichkeit, dass die Verbindungsmittel im an dem Zweirad angebrachten Zustand des Gepäckträgers auf ihrer Vorderseite eine Plakette, insbesondere eine Plakette mit Kennzeichnungen nach DIN EN ISO 11243, aufweisen oder aufweisen können. Auch ohne Abdeckung können somit die Verbindungsmittel dazu dienen, optionale Anbauteile an dem Gepäckträger anzubringen.

Es besteht die Möglichkeit, dass Mittel zur Anbringung des Gepäckträgers an dem Zweirad Mittel zur Befestigung des Gepäckträgers an einem Radschützer des Zweirades oder an einer unter dem Radschützer verlaufende Strebe umfassen. Als weiterer Anbringungsbereich für den Gepäckträger können somit ein gegebenenfalls stabiler, beispielsweise aus Metall bestehender Radschützer, oder eine unterhalb des Radschützers angeordnete Strebe verwendet werden, wobei die Strebe insbesondere aus Metall bestehen kann.

Es besteht die Möglichkeit, dass die Mittel zur Befestigung des Gepäckträgers eine Aufnahme für den Querabschnitt des Befestigungselements aufweisen, wobei die Aufnahme insbesondere zwei Teile aufweist, die an den Querschnitt des Querabschnitts angepasste Aussparungen aufweisen, so dass die Teile zumindest abschnittsweise formschlüssig an dem Querabschnitt anliegen oder anliegen können. Dabei können die Mittel zur Befestigung des Gepäckträgers mindestens eine Schraubverbindung aufweisen. Insbesondere kann eine erste Schraubverbindung die Teile an den Querabschnitt des Befestigungselements andrücken und diesen damit in der Aufnahme festlegen. Vorzugsweise kann die erste Schraubverbindung gleichzeitig den Gepäckträger mit dem Radschützer oder mit einer unter dem Radschützer verlaufenden Strebe verbinden. Auf diese Weise wird mit einfachen Mitteln erreicht, dass der Gepäckträger sicher an dem Radschützer oder einer unterhalb des Radschützers angeordneten Strebe befestigt wird.

Es besteht die Möglichkeit, dass eine zweite Schraubverbindung die Verbindungsmittel mit dem Radschützer verbinden kann. Diese weitere Befestigung des Gepäckträgers an dem Radschützer kann die Stabilität des Gepäckträgers im montierten Zustand erhöhen.

Es kann vorgesehen sein, dass das mindestens eine Befestigungselement als Rohr ausgebildet ist und/oder dass die Verbindungsmittel aus einem Leichtmetall oder aus einer Leichtmetalllegierung, insbesondere aus Aluminium, bestehen oder dass die Verbindungsmittel ein Leichtmetall oder eine Leichtmetalllegierung, insbesondere Aluminium, umfassen. Ein Rohr kann bei entsprechender Gestaltung eine große Festigkeit bei geringem Gewicht gewährleisten. Beispielsweise kann das aus dem Befestigungselement bestehende Grundgerüst des Gepäckträgers in einer vollautomatischen Rohrbiegemaschine gebogen werden, so dass durch den Verzicht auf manuelle Verfahrensschritte Kosten eingespart werden können. Durch die Verwendung eines Leichtmetalls oder einer Leichtmetalllegierung für die Verbindungsmittel kann die erforderliche Biegesteifigkeit gewährleistet werden, ohne dass dabei der Gepäckträger ein zu großes Gewicht aufweist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

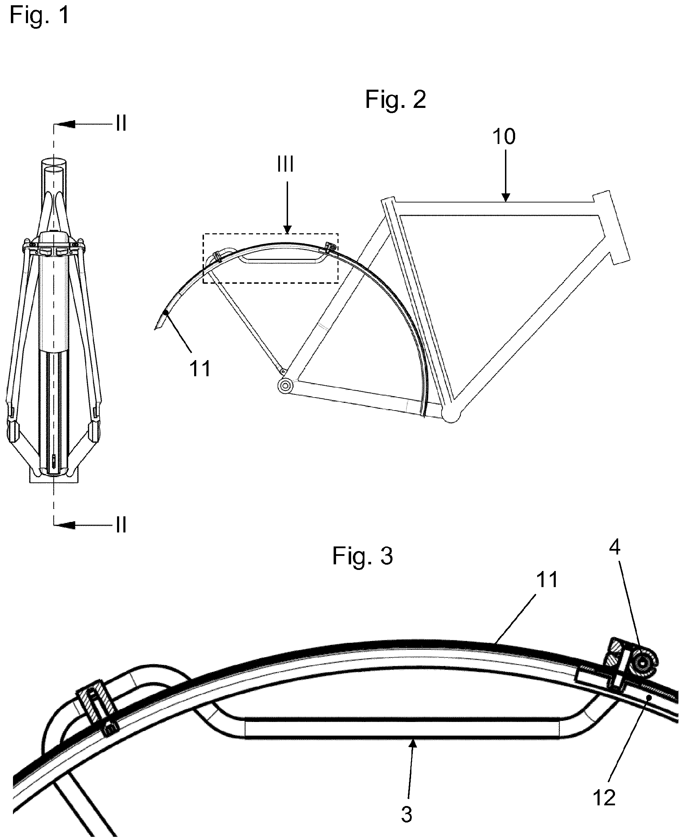

- Fig. 1: eine Ansicht von hinten auf einen Teil eines Fahrrads mit einem erfindungsgemäßen Gepäckträger;
- Fig. 2: eine Schnittansicht gemäß den Pfeilen II - II in Fig. 1;
- Fig. 3: eine Detailansicht gemäß dem Pfeil III in Fig. 2;
- Fig. 4: eine perspektivische Ansicht des Teil des Fahrrads mit dem erfindungsgemäßen Gepäckträger gemäß Fig. 1;
- Fig. 5: eine perspektivische Explosionsansicht des Teil des Fahrrads mit dem erfindungsgemäßen Gepäckträger gemäß Fig. 1;
- Fig. 6: eine Draufsicht auf den erfindungsgemäßen Gepäckträger mit einer Strebe des Fahrrads;
- Fig. 7: eine Seitenansicht auf den erfindungsgemäßen Gepäckträger mit der Strebe des Fahrrads gemäß Fig. 6;
- Fig. 8: eine perspektivische Explosionsansicht des erfindungsgemäßen Gepäckträgers und der Strebe des Fahrrads gemäß Fig. 6;

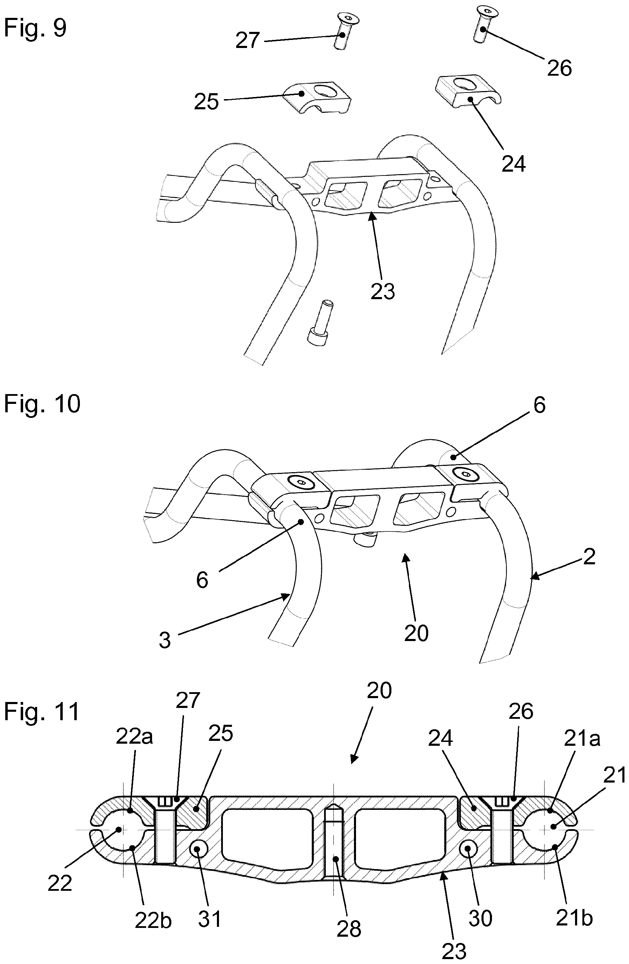

- Fig. 9: eine perspektivische Explosionsansicht von Verbindungsmitteln des erfindungsgemäßen Gepäckträgers;
- Fig. 10: eine perspektivische Ansicht der Verbindungsmittel des erfindungsgemäßen Gepäckträgers;
- Fig. 11: einen Schnitt durch die Verbindungsmittel des erfindungsgemäßen Gepäckträgers;

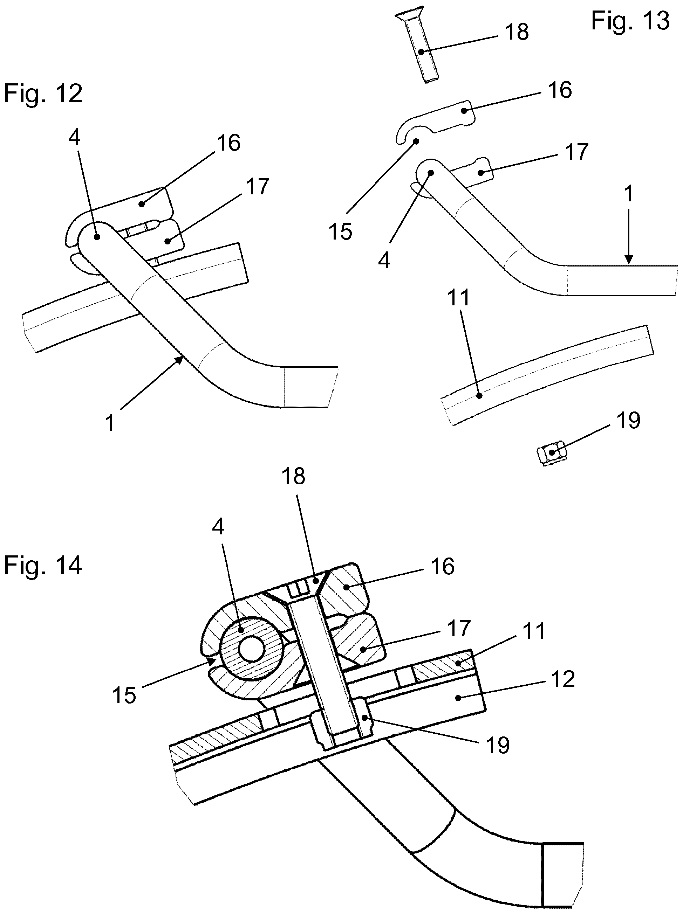

- Fig. 12: eine Seitenansicht auf Mittel zur Befestigung des erfindungsgemäßen Gepäckträgers;
- Fig. 13: eine Explosionsansicht der Mittel zur Befestigung des erfindungsgemäßen Gepäckträgers;
- Fig. 14: einen Schnitt durch die Mittel zur Befestigung des erfindungsgemäßen Gepäckträgers;

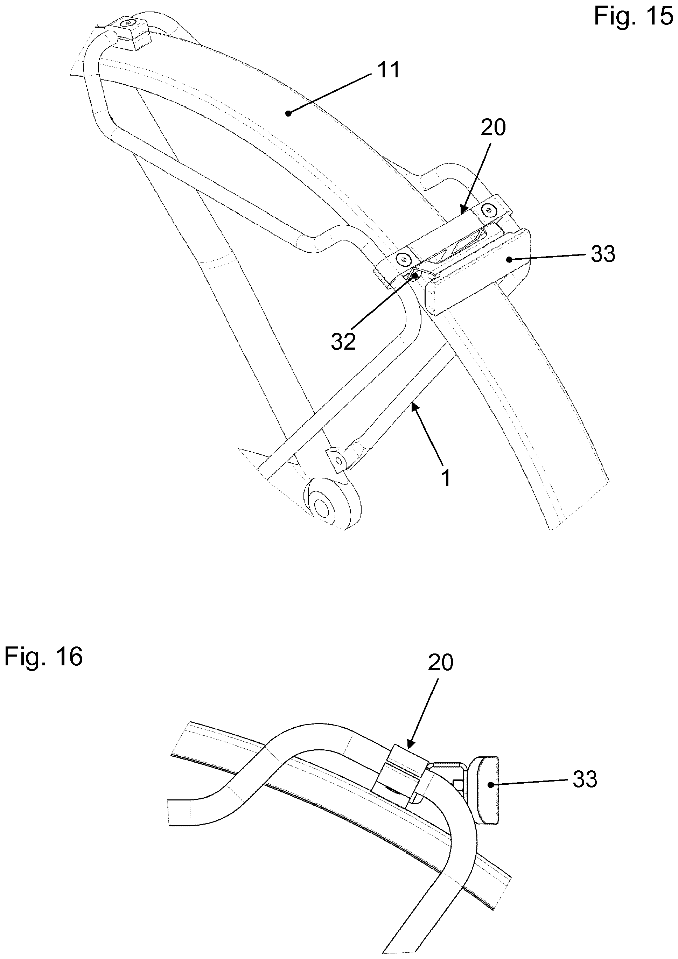

- Fig. 15: eine perspektivische Ansicht des an einem Hinterrad eines Fahrrads angebrachten erfindungsgemäßen Gepäckträgers mit einem Anbauteil;
- Fig. 16: eine Seitenansicht des an einem Hinterrad eines Fahrrads angebrachten erfindungsgemäßen Gepäckträgers mit dem Anbauteil.

In den Figuren sind gleiche und funktional gleiche Teile mit gleichen Bezugszeichen versehen.

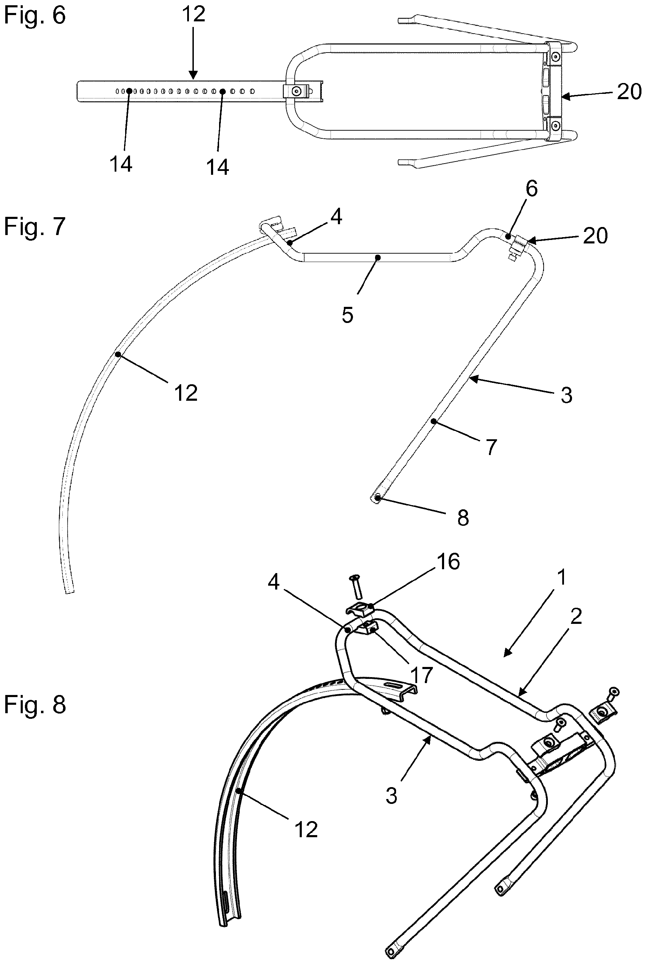

Ein erfindungsgemäßer Gepäckträger umfasst ein langgestrecktes, mehrfach gebogenes Befestigungselement 1, das insbesondere als Rohr ausgebildet ist (siehe beispielsweise Fig. 8). Das Befestigungselement 1 kann aus Aluminium bestehen. Das als Rohr mit einem kreisförmigen Querschnitt ausgebildete Befestigungselement 1 kann einen Durchmesser von 10 mm und eine Wandstärke von 3 mm aufweisen.

Es besteht durchaus die Möglichkeit anstelle eines Rohres mit kreisförmigem Querschnitt ein Rohr mit einem ovalen oder einem anders gestalteten Querschnitt vorzusehen. Weiterhin besteht auch die Möglichkeit, anstelle eines Rohres ein Befestigungselement aus einem Vollmaterial mit kreisförmigem oder ovalem oder anders geformten Querschnitt vorzusehen.

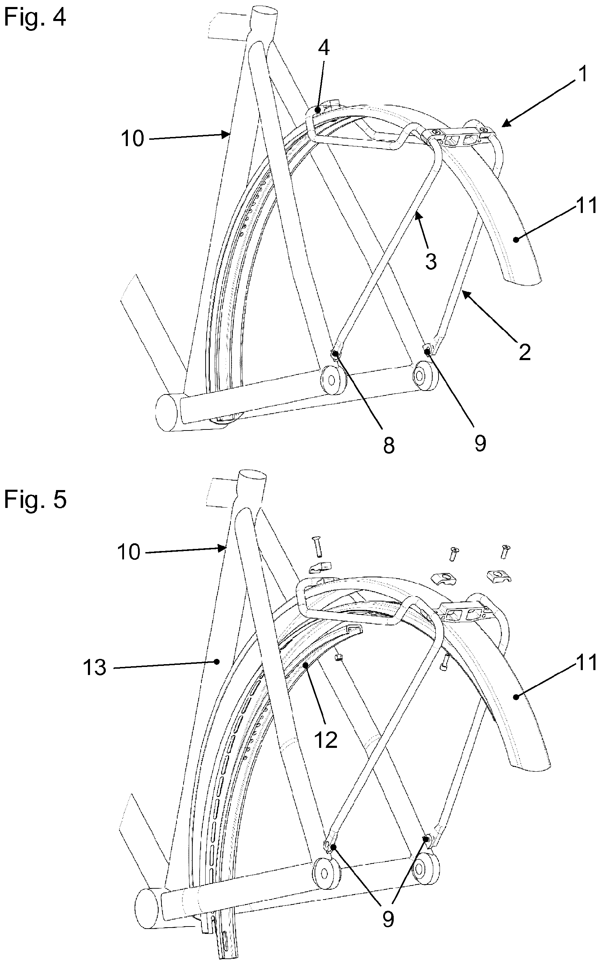

Das Befestigungselement 1 weist einen ersten Abschnitt 2 und einen zweiten, zu dem ersten weitgehend parallelen Abschnitt 3 auf, wobei die beiden Abschnitte 2, 3 über einen Querabschnitt 4 des Befestigungselements 1 miteinander verbunden sind (siehe Fig. 8). Dabei erstreckt sich im abgebildeten Ausführungsbeispiel der erste Abschnitt 2 an der rechten Seite des nicht abgebildeten Hinterrades des Fahrrades, wohingegen sich der zweite Abschnitt 3 an der linken Seite des Hinterrades des Fahrrades erstreckt (siehe Fig. 4). Der Querabschnitt 4 verbindet in Fahrradquerrichtung die beiden Abschnitte 2, 3 miteinander.

## Patentansprüche

1. Gepäckträger für das Hinterrad eines Zweirads, insbesondere für das Hinterrad eines Fahrrads, umfassend
- ein langgestrecktes, mehrfach gebogenes Befestigungselement (1), das einen ersten Abschnitt (2), einen zum ersten Abschnitt parallelen zweiten Abschnitt (3) und lediglich einen, diese verbindenden Querabschnitt (4) aufweist, wobei sich im an dem Zweirad angebrachten Zustand des Gepäckträgers an jeder der beiden Seiten eines Rades jeweils ein Abschnitt (2, 3) des Befestigungselements (1) erstreckt,
- Mittel zur Anbringung des Gepäckträgers an dem Zweirad, die im an dem Zweirad angebrachten Zustand des Gepäckträgers jeweils an den unteren Enden der beiden Abschnitte (2, 3) des Befestigungselements (1) in Form von Bohrungen (8) angeordnet sind, wobei die Bohrungen (8) zur Anbringung der unteren Enden an den Ausfallenden (9) des Rahmens (10) des Zweirads verwendet werden können,
- Verbindungsmittel (20), die die beiden Abschnitte (2, 3) des Befestigungselements (1) miteinander verbinden, wobei die Verbindungsmittel (20) derart gestaltet sind, dass durch die Verbindungsmittel (20) die beiden Abschnitte (2, 3) des Befestigungselements (1) kraft- und/oder formschlüssig miteinander verbunden sind, wobei die Verbindungsmittel (20) derart gestaltet sind, dass durch die Verbindungsmittel (20) die beiden Abschnitte (2, 3) des Befestigungselements (1) über mindestens eine Schraubverbindung miteinander verbunden sind,
**dadurch gekennzeichnet, dass** der Querabschnitt (4) im an dem Zweirad angebrachten Zustand des Gepäckträgers weiter vorne und höher an dem Zweirad als die Bohrungen (8) angeordnet ist.

2. Gepäckträger nach Anspruch 1, **dadurch gekennzeichnet, dass** die Verbindungsmittel (20) derart gestaltet sind, dass durch die Verbindungsmittel (20) die beiden Abschnitte (2, 3) des Befestigungselements (1) über zwei Schraubverbindungen miteinander verbunden sind.

3. Gepäckträger nach einem der Ansprüche 1 oder 2, **dadurch gekennzeichnet, dass** die Verbindungsmittel (20) zwei Aufnahmen (21, 22) aufweisen, in denen jeweils einer der beiden Abschnitte (2, 3) des Befestigungselements (1) angeordnet und festgelegt ist oder angeordnet und festgelegt werden kann, wobei insbesondere mindestens eine der Aufnahmen (21, 22) oder jede der beiden Aufnahmen (21, 22) durch zwei Teile gebildet wird, die an den Querschnitt des Befestigungselements (1) angepasste Aussparungen (21a, 21b; 22a, 22b) aufweisen, so dass die Teile zumindest abschnittsweise formschlüssig an dem Befestigungselement (1) anliegen können.

4. Gepäckträger nach Anspruch 3, **dadurch gekennzeichnet, dass** die Festlegung einer der beiden Abschnitte (2, 3) des Befestigungselements (1) in jeder der Aufnahmen (21, 22) durch eine Schraubverbindung erfolgt, wobei durch die Schraubverbindung insbesondere die beiden Teile an das Befestigungselement (1) angedrückt werden.

5. Gepäckträger nach einem der Ansprüche 1 bis 4, **dadurch gekennzeichnet, dass** die Verbindungsmittel (20) als eine Befestigungsbrücke, insbesondere eine stegförmige Befestigungsbrücke, ausgebildet sind, die sich im an dem Zweirad angebrachten Zustand des Gepäckträgers von einer Seite des Rades zur anderen Seite des Rades erstreckt, insbesondere wobei die Aufnahmen (21, 22) jeweils in einem endseitigen Bereich der Befestigungsbrücke angeordnet sind.

6. Gepäckträger nach einem der Ansprüche 1 bis 5, **dadurch gekennzeichnet, dass** die Verbindungsmittel (20) eine Abdeckung umfassen, die im an dem Zweirad angebrachten Zustand des Gepäckträgers insbesondere die Oberseite der Verbindungsmittel (20) abdecken kann.

7. Gepäckträger nach Anspruch 6, **dadurch gekennzeichnet, dass** die Abdeckung im an dem Zweirad angebrachten Zustand des Gepäckträgers
- auf ihrer Oberseite eine Kennzeichnung wie beispielsweise ein Logo und/oder
- auf ihrer Rückseite einen Rückstrahler (33) und/oder ein Rücklicht und/oder
- auf ihrer Vorderseite eine Plakette aufweist oder aufweisen kann.

8. Gepäckträger nach einem der Ansprüche 1 bis 7, **dadurch gekennzeichnet, dass** die Verbindungsmittel (20) im an dem Zweirad angebrachten Zustand des Gepäckträgers
- auf ihrer Oberseite eine Kennzeichnung wie beispielsweise ein Logo und/oder
- auf ihrer Rückseite einen Rückstrahler (33) und/oder ein Rücklicht und/oder
- auf ihrer Vorderseite eine Plakette
- aufweisen oder aufweisen können.

9. Gepäckträger nach einem der Ansprüche 1 bis 8, **dadurch gekennzeichnet, dass** Mittel zur Anbringung des Gepäckträgers an dem Zweirad Mittel zur Befestigung des Gepäckträgers an einem Radschützer (11) des Zweirades oder an einer unter dem Radschützer verlaufende Strebe (12) umfassen.

10. Gepäckträger nach einem der Ansprüche 1 bis 9, **dadurch gekennzeichnet, dass** die Mittel zur Befestigung des Gepäckträgers eine Aufnahme (15) für den Querabschnitt (4) des Befestigungselements (1) aufweisen, wobei die Aufnahme (15) insbesondere zwei Teile (16, 17) aufweist, die an den Querschnitt des Querabschnitts (4) angepasste Aussparungen aufweisen, so dass die Teile (16, 17) zumindest abschnittsweise formschlüssig an dem Querabschnitt (4) anliegen oder anliegen können.

11. Gepäckträger nach einem der Ansprüche 1 bis 10, **dadurch gekennzeichnet, dass** die Mittel zur Befestigung des Gepäckträgers mindestens eine Schraubverbindung aufweisen, insbesondere wobei
- eine erste Schraubverbindung die Teile (16, 17) an den Querabschnitt (4) des Befestigungselements (1) andrückt oder andrücken kann und diesen damit in der Aufnahme (15) festlegt oder festlegen kann, und wobei vorzugsweise die erste Schraubverbindung gleichzeitig den Gepäckträger mit dem Radschützer (11) oder mit einer unter dem Radschützer verlaufenden Strebe (12) verbinden kann, und/oder wobei
- eine zweite Schraubverbindung die Verbindungsmittel (20) mit dem Radschützer verbinden kann.

12. Gepäckträger nach einem der Ansprüche 1 bis 11, **dadurch gekennzeichnet, dass** das mindestens eine Befestigungselement (1) als Rohr ausgebildet ist und/oder dass die Verbindungsmittel (20) aus einem Leichtmetall oder aus einer Leichtmetalllegierung, insbesondere aus Aluminium, bestehen oder dass die Verbindungsmittel (20) ein Leichtmetall oder eine Leichtmetalllegierung, insbesondere Aluminium, umfassen.

13. Anordnung eines Gepäckträgers an einem Zweirad, umfassend einen Gepäckträger nach einem der Ansprüche 1 bis 12 sowie einen Radschützer (11) und eine Strebe (12), wobei der Gepäckträger an dem Radschützer (11) und/oder an der unter dem Radschützer (11) verlaufenden Strebe (12) befestigt ist.

## Claims

1. Luggage rack for the rear wheel of a two-wheeled vehicle, in particular for the rear wheel of a bicycle, comprising
- an elongated mounting element (1) with multiple bends, which has a first section (2), a second section (3) parallel to the first section and only one transverse section (4) connecting the above sections, wherein, when the luggage rack is attached to the two-wheeled vehicle, one section (2, 3) of the mounting element (1) extends on each of the two sides of a wheel in each case,
- Means for attaching the luggage rack to the two-wheeled vehicle, which, when the luggage rack is attached to the two-wheeled vehicle, are each arranged at the lower ends of the two sections (2, 3) of the mounting element (1) in the form of drilled holes (8), wherein the drilled holes (8) can be used to attach the lower ends to the dropouts (9) of the frame (10) of the two-wheeled vehicle,
- Connecting means (20), which connect the two sections (2, 3) of the mounting element (1) to each other, wherein the connecting means (20) are designed such that the two sections (2, 3) of the mounting element (1) are connected to each other in a force-fitting and/or form-fitting manner by the connecting means (20), wherein the connecting means (20) are designed such that the two sections (2, 3) of the mounting element (1) are connected to each other by the connecting means (20) by means of at least one screw connection,
**characterised in that**, when the luggage rack is attached to the two-wheeled vehicle, the transverse section (4) is arranged further forward and higher on the two-wheeled vehicle than the drilled holes (8).

2. Luggage rack according to claim 1, **characterised in that** the connecting means (20) are designed such that the two sections (2, 3) of the mounting element (1) are connected to each other by the connecting means (20) by means of two screw connections.

3. Luggage rack according to any of claims 1 or 2, **characterised in that** the connecting means (20) have two sockets (21, 22), in each of which one of the two sections (2, 3) of the mounting element (1) is arranged and secured or can be arranged and secured, wherein in particular at least one of the sockets (21, 22) or each of the two sockets (21, 22) is formed by two parts, which have recesses (21a, 21b; 22a, 22b) adapted to the cross-section of the mounting element (1), such that the parts can abut the mounting element (1) in a form-fitting manner at least in sections.

4. Luggage rack according to claim 3, **characterised in that** one of the two sections (2, 3) of the mounting element (1) is secured in each of the sockets (21, 22) by means of a screw connection, wherein in particular the two parts are pressed against the mounting element (1) by means of the screw connection.

5. Luggage rack according to any of claims 1 to 4, **characterised in that** the connecting means (20) are designed as an attachment bridge, in particular a strut-shaped attachment bridge, which extends from one side of the wheel to the other side of the wheel when the luggage rack is attached to the two-wheeled vehicle, in particular wherein the sockets (21, 22) are each arranged in an end region of the attachment bridge.

6. Luggage rack according to any of claims 1 to 5, **characterised in that** the connecting means (20) comprise a cover, which can cover, in particular, the upper side of the connecting means (20) when the luggage rack is attached to the two-wheeled vehicle.

7. Luggage rack according to claim 6, **characterised in that**, when the luggage rack is attached to the two-wheeled vehicle, the cover has or can have
- a marking such as, for example, a logo on its upper side and/or
- a reflector (33) and/or a rear light on its rear side and/or
- a badge on its front side.

8. Luggage rack according to any of claims 1 to 7, **characterised in that**, when the luggage rack is attached to the two-wheeled vehicle, the connecting means (20) have or can have
- a marking such as, for example, a logo on its upper side and/or
- a reflector (33) and/or a rear light on its rear side and/or
- a badge on its front side

9. Luggage rack according to any of claims 1 to 8, **characterised in that** the means for attaching the luggage rack to the two-wheeled vehicle comprise means for mounting the luggage rack on a mudguard (11) of the two-wheeled vehicle or on a strut (12) running below the mudguard.

10. Luggage rack according to any of claims 1 to 9, **characterised in that** the means for mounting the luggage rack have a socket (15) for the transverse section (4) of the mounting element (1), wherein the socket (15) has, in particular, two parts (16, 17), which have recesses adapted to the cross-section of the transverse section (4), such that the parts (16, 17) abut or can abut the transverse section (4) in a form-fitting manner at least in sections.

11. Luggage rack according to any of claims 1 to 10, **characterised in that** the means for mounting the luggage rack have at least one screw connection, in particular, wherein
- a first screw connection presses or can press the parts (16, 17) against the transverse section (4) of the mounting element (1) and thereby secure or can secure the latter in the socket (15), and wherein preferably the first screw connection can simultaneously connect the luggage rack to the mudguard (11) or to a strut (12) running below the mudguard, and/or wherein
- a second screw connection can connect the connecting means (20) to the mudguard.

12. Luggage rack according to any of claims 1 to 11, **characterised in that** the at least one mounting element (1) is designed as a tube and/or that the connecting means (20) consists of a light metal or of a light metal alloy, in particular, of aluminium, or that the connecting means (20) comprise a light metal or a light metal alloy, in particular, aluminium.

13. Arrangement of a luggage rack on a two-wheeled vehicle, comprising a luggage rack according to any of claims 1 to 12, as well as a mudguard (11) and a strut (12), wherein the luggage rack is mounted on the mudguard (11) and/or on the strut (12) running below the mudguard (11).

## Revendications

1. Porte-bagages pour la roue arrière d'un deux-roues, en particulier pour la roue arrière d'une bicyclette, comprenant
- un élément de fixation (1) allongé, plié à de multiples reprises qui présente un premier segment (2), un second segment (3) parallèle au premier segment et juste un segment transversal (4) les reliant, dans lequel respectivement un segment (2, 3) de l'élément de fixation (1) s'étend dans l'état du porte-bagages monté sur le deux-roues au niveau de chacun des deux côtés d'une roue,
- des moyens pour le montage du porte-bagages au niveau du deux-roues qui sont agencés dans l'état monté au niveau du deux-roues du porte-bagages respectivement aux extrémités inférieures des deux segments (2, 3) de l'élément de fixation (1) sous la forme de perçages (8), dans lequel les perçages (8) peuvent être utilisés pour le montage des extrémités inférieures aux extrémités de dérailleur (9) du cadre (10) du deux-roues,
- des moyens de liaison (20) qui relient entre eux les deux segments (2, 3) de l'élément de fixation (1), dans lequel les moyens de liaison (20) sont conçus de telle manière que par les moyens de liaison (20) les deux segments (2, 3) de l'élément de fixation (1) soient reliés entre eux à force et/ou par complémentarité de formes, dans lequel les moyens de liaison (20) sont conçus de telle manière que par les moyens de liaison (20) les deux segments (2, 3) de l'élément de fixation (1) soient reliés entre eux par le biais d'au moins une liaison vissée,
**caractérisé en ce que** le segment transversal (4) est agencé dans l'état monté au niveau du deux-roues du porte-bagages plus vers l'avant et plus haut sur le deux-roues que les perçages (8).

2. Porte-bagages selon la revendication 1, **caractérisé en ce que** les moyens de liaison (20) sont conçus de telle manière que par les moyens de liaison (20) les deux segments (2, 3) de l'élément de fixation (1) soient reliés entre eux par le biais de deux liaisons vissées.

3. Porte-bagages selon l'une quelconque des revendications 1 ou 2, **caractérisé en ce que** les moyens de liaison (20) présentent deux logements (21, 22), dans lequels respectivement un des deux segments (2, 3) de l'élément de fixation (1) est agencé et fixé ou peut être agencé et fixé, dans lequel en particulier au moins un des logements (21, 22) ou chacun des deux logements (21, 22) est formé par deux parties qui présentent des évidements (21a, 21b ; 22a, 22b) adaptés à la section transversale de l'élément de fixation (1) de sorte que les parties puissent reposer au moins par sections par complémentarité de formes contre l'élément de fixation (1).

4. Porte-bagages selon la revendication 3, **caractérisé en ce que** la fixation d'un des deux segments (2, 3) de l'élément de fixation (1) dans chacun des logements (21, 22) est effectuée par une liaison vissée, dans lequel en particulier les deux parties sont pressées contre l'élément de fixation (1) par la liaison vissée.

5. Porte-bagages selon l'une quelconque des revendications 1 à 4, **caractérisé en ce que** les moyens de liaison (20) sont réalisés comme un pont de fixation, en particulier un pont de fixation en forme de traverse qui s'étend dans l'état monté au niveau du deux-roues du porte-bagages d'un côté de la roue à l'autre côté de la roue, en particulier dans lequel les logements (21, 22) sont agencés respectivement dans une zone côté extrémité du pont de fixation.

6. Porte-bagages selon l'une quelconque des revendications 1 à 5, **caractérisé en ce que** les moyens de liaison (20) comportent un recouvrement qui peut recouvrir dans l'état monté au niveau du deux-roues du porte-bagages, en particulier le côté supérieur des moyens de liaison (20).

7. Porte-bagages selon la revendication 6, **caractérisé en ce que** le recouvrement présente ou peut présenter dans l'état monté au niveau du deux-roues du porte-bagages
- sur son côté supérieur une caractérisation telle qu'un logo et/ou
- sur son côté arrière un catadioptre (33) et/ou un feu arrière et/ou
- sur son côté avant une plaquette.

8. Porte-bagages selon l'une quelconque des revendications 1 à 7, **caractérisé en ce que** les moyens de liaison (20) présentent ou peuvent présenter dans l'état monté au niveau du deux-roues du porte-bagages
- sur son côté supérieur une caractérisation telle qu'un logo et/ou
- sur son côté arrière un catadioptre (33) et/ou un feu arrière et/ou
- sur son côté avant une plaquette

9. Porte-bagages selon l'une quelconque des revendications 1 à 8, **caractérisé en ce que** des moyens de montage du porte-bagages au niveau du deux-roues comportent des moyens de fixation du porte-bagages à un garde-boue (11) du deux-roues ou à une entretoise (12) s'étendant sous le garde-boue.

10. Porte-bagages selon l'une quelconque des revendications 1 à 9, **caractérisé en ce que** les moyens de fixation du porte-bagages présente un logement (5) pour le segment transversal (4) de l'élément de fixation (1), dans lequel le logement (15) présente en particulier deux parties (16, 17) qui présentent des évidements adaptés à la section transversale du segment transversal (4) de sorte que les parties (16, 17) reposent ou puissent reposer au moins par sections à complémentarité de formes contre le segment transversal (4).

11. Porte-bagages selon l'une quelconque des revendications 1 à 10, **caractérisé en ce que** les moyens de fixation du porte-bagages présentent au moins une liaison vissée, en particulier dans lequel
- une première liaison vissée presse ou peut presser les parties (16, 17) contre le segment transversal (4) de l'élément de fixation (1) et fixe ou peut fixer celui-ci ainsi dans le logement (15), et dans lequel de préférence la première liaison vissée peut relier simultanément le porte-bagages au garde-boue (11) ou à une entretoise (12) s'étendant sous le garde-boue, et/ou dans lequel
- une seconde liaison vissée peut relier les moyens de liaison (20) au garde-boue.

12. Porte-bagages selon l'une quelconque des revendications 1 à 11, **caractérisé en ce que** l'au moins un élément de fixation (1) est réalisé comme tube et/ou que les moyens de liaison (20) consistent en un métal léger ou un alliage de métal léger, en particulier en aluminium ou que les moyens de liaison (20) comportent un métal léger ou un alliage de métal léger, en particulier de l'aluminium.

13. Agencement d'un porte-bagages au niveau d'un deux-roues, comprenant un porte-bagages selon l'une quelconque des revendications 1 à 12 ainsi qu'un garde-boue (11) et une entretoise (12), dans lequel le porte-bagages est fixé au garde-boue (11) et/ou à l'entretoise (12) s'étendant sous le garde-boue (11).
